# EUROPÄISCHE PATENTSCHRIFT

(11) **EP 2 572 568 B1**
(45) Veröffentlichungstag und Bekanntmachung des Hinweises auf die Patenterteilung: **30.04.2014**
(21) Anmeldenummer: 12006609.7
(22) Anmeldetag: 20.09.2012
(51) Int. Cl.: A01D 45/02

(54) **Maispflücker mit Mitnehmervorrichtung**
Corn header with sweeper device
Cueilleur à maïs avec dispositif d'entraîneur

(30) Priorität: 20.09.2011 DE 102011113684
(43) Veröffentlichungstag der Anmeldung: 27.03.2013
(73) Patentinhaber: Carl Geringhoff GmbH & Co. KG, 59227 Ahlen (DE)
(72) Erfinder: Surmann, Klemens, 59227 Ahlen (DE); Hemmesmann, Andre, 48336 Sassenberg (DE); Albinger, Bernd, 88348 Bad Saulgau (DE)
(74) Vertreter: Busse & Busse

(56) Entgegenhaltungen:
- DE-A1- 19 508 887
- US-A1- 2006 185 339
- US-A1- 2008 282 661
- US-B2- 6 672 042

## Beschreibung

Die vorliegende Erfindung bezieht sich auf einen Maispflücker nach dem Oberbegriff des Anspruchs 1.

Ein an einen Mähdrescher anbaubarer Maispflücker ist in der Schrift US 6,672,042 B2 offenbart. Die Mitnehmervorrichtung dient dem Zweck, Erntegut, das sich auf den Abdeckungen der Fördervorrichtungen ansammelt und aufbaut, abzufördern. Die Mitnehmervorrichtung ist von zwei Haltearmen gehalten, die zur Höhenverstellung um eine Drehachse schwenkbar sind. Um die relative Lage der Mitnehmervorrichtung zum übrigen Maispflücker in horizontaler Richtung verstellen zu können, ist jeder Haltearm mit einem vorderen Abschnitt versehen, der auf den übrigen Haltearm aufgeschoben und durch Splinte in verschiedenen Positionen festlegbar ist. Eine Längsverstellung ist damit nur manuell bei stehender Maschine mit erheblichem Umbauaufwand möglich. Mit dieser Verstellvorrichtung ist eine Anpassung der räumlichen Lage der Mitnehmervorrichtung in Längsrichtung an eine aktuelle Erntesituation bei laufender Maschine nicht möglich.

Aus der Schrift DE 10 2006 029 608 A1 ist eine Verstellvorrichtung für die Haspel eines Getreideschneidwerks bekannt, bei der die Höhenführung begrenzt ist, um bei besonders hohem Erntegut eine Kollision der Haspel mit der Kabine zu vermeiden. Eine motorische Längsverstellung der Haspel ist nur entlang der geraden Haspeltragarme möglich, die je nach Schwenkstellung meistens nicht parallel zum Schneidwerksboden verlaufen. Um bei einer Längsverstellung der Haspel ein gewünschtes Höhenmaß einzuhalten, ist es dann erforderlich, zusätzlich zur Längsverstellung auch die Höhenverstellung der Haspel nachzujustieren.

Ein gattungsgemäßer Maiserntevorsatz ist auch aus der Schrift US 2008/0282661 bekannt. Zur Längs- und Höhenverstellung der Lage der Mitnehmer müssen zwei Hydraulikzylinder betätigt werden. Weitere verstellbare Mitnehmervorrichtungen sind in den Schriften US 2006/0185339 A1 und DE 195 08 887 A1 offenbart.

Es ist die Aufgabe der vorliegenden Erfindung, die Verstellbarkeit der Mitnehmervorrichtung zu verbessern.

Die Aufgabe wird für einen gattungsgemäßen Maispflücker mit den im kennzeichnenden Teil des Anspruchs 1 genannten Merkmalen gelöst.

Durch die Bewegung der Mitnehmervorrichtung entlang einer Kurvenbahn ist es möglich, die Mitnehmervorrichtung einerseits dicht an der Oberfläche von anderen Bauteilen des Maispflückers entlang zu führen, so dass nahezu alles Erntegut, das sich auf den Abdeckungen der Fördervorrichtungen angesammelt hat, von der Mitnehmervorrichtung erreicht und mitgenommen werden kann, andererseits aber eine Kollision mit den entsprechenden Abdeckungen sicher ausgeschlossen ist. Durch die motorische Betätigbarkeit kann eine Verstellung auch während der Fahrt vorgenommen werden.

Für den Fahrer eines Mähdreschers stellt die Zwangsführung eine wesentliche Bedienungserleichterung dar, da er die Mitnehmervorrichtung nur noch vor oder zurück bewegen muss, um sich ansammelndes Erntegut vom Maispflücker zu entfernen. Da er bei sich aufbauendem Erntegut die Oberflächen von darunter befindlichen Bauteilen des Maispflückers häufig nicht sehen kann, wäre es für ihn sehr schwierig, die Mitnehmervorrichtung so zu verstellen, dass er die Mitnehmervorrichtung dicht über die Oberflächen der darunter befindlichen Bauteile führt, ohne dass allerdings die Mitnehmervorrichtung mit diesen kollidiert. Ein Verstellvorgang würde die Konzentration des Fahrers voll beanspruchen und ihn vom eigentlichen Erntevorgang ablenken. Wahrscheinlich müsste der Verstellvorgang ohne die Zwangsführung auch mehrfach wiederholt werden, da der Fahrer sonst aus Vorsichtsgründen eher einen zu großen Sicherheitsabstand der Mitnehmervorrichtung zu den darunter befindlichen Oberflächen einhielte und das Abförderergebnis deshalb nicht zufrieden stellend ist.

Durch die Zwangsführung an einer Kurvenbahn entlang kann die Mitnehmervorrichtung nicht nur an einer geraden Linie entlang geführt werden, sondern die Mitnehmervorrichtung kann auch Erhebungen und Stufen in den Oberflächen der Abdeckungen in horizontaler und vertikaler Richtung gleichzeitig folgen, ohne dass der Fahrer dies selbst steuern muss. Dies ist gegenüber flachen Getreideschneidwerken eine entscheidende Verbesserung, weil die Schneid- und Förderorgane in einem Maispflücker höher aufbauen und eine längere Längserstreckung benötigen, um ihre Pflückfunktion erfüllen zu können. Dadurch ist eine Koordinierung der Höhen- und Längsverstellung der Mitnehmervorrichtung bei einem Maispflücker viel schwieriger. Durch die Zwangsführung entlang einer Kurvenbahn ist es auch möglich, die Mitnehmervorrichtung so weit nach vorne und unten hin zu verstellen, dass die Mitnehmervorrichtung bis in den Bereich unmittelbar vor den Schneidorganen des Maispflückers reicht. Bei einem so weit nach vorne reichenden Verstellbereich, der die Höhenstufe von den Oberflächen der Abdeckungen der Fördervorrichtungen hinunter zu den bodennahen Schneidorganen mit einschließt, kann der Fahrer des Mähdreschers mit einer Verfahrbewegung der Mitnehmervorrichtung entlang der Kurvenbahn die gesamte Förderstrecke des Ernteguts von den Schneidorganen bis zur Querförderschnecke von sich aufbauendem Erntegut während des laufenden Betriebs der Maschine frei räumen.

Durch die Zwangsführung entlang einer Kurvenbahn kann der Fahrer des Mähdreschers die Mitnehmervorrichtung jederzeit in eine im günstig erscheinende Richtung allein durch die Betätigung eines Bedienknopfes in eine "vorwärts"- oder "rückwarts"-Richtung verstellen, ohne dass er sich dabei Gedanken über eine eventuelle Kollision mit anderen Bauteilen machen muss. Der Fahrer kann somit ganz spontan auf aktuelle Erntesituationen durch einen einfachen Knopfdruck reagieren und die Oberfläche des Maispflückers schnell von sich aufbauendem Erntegut frei räumen.

Jeder Haltearm bildet auf die beschriebene Weise mit dem zugehörigen Schwenkarm ein Vielgelenk aus, bei dem sich aus der räumlichen Lage des Haltearms, des Schwenkarms und des Stützelements zueinander sowie den jeweiligen Positionen der einzelnen Drehachsen bei einer Betätigung der Längsverstellvorrichtung nur eine genau definierte resultierende Bewegung der Mitnehmervorrichtung ergibt. Das beschriebene Vielgelenk bildet eine mechanische Zwangsführung, bei der die Mitnehmervorrichtung immer nur entlang der durch das Vielgelenk vorgegebenen Bewegungsbahn beweglich ist. Die Länge und der Verlauf der Bewegungsbahn können durch die Festlegung der entsprechenden Geometrien des Haltearms, des Schwenkarms und des Stützelements zueinander sowie den jeweiligen Positionen der einzelnen Drehachsen genau bestimmt werden. Das Vielgelenk kann kostengünstig hergestellt werden und funktioniert auch unter rauen Erntebedingungen mit Schmutz und Feuchtigkeit zuverlässig.

Durch den Einsatz nur eines einzigen Hydraulikzylinders pro Haltearm für eine Verstellung der Mitnehmervorrichtung in horizontaler und vertikaler Richtung bleibt die Verstellvorrichtung vergleichsweise kostengünstig und leicht. Eine Koordinierung mehrerer Antriebe zur Ausführung einer Verstellbewegung durch den Fahrer oder eine Bedienautomatik ist nicht erforderlich, wodurch die Komplexität der Verstellvorrichtung vergleichsweise gering bleibt. Im Falle von eventuellen Funktionsstörungen ist die nur einen Hydraulikzylinder aufweisende Längsverstellvorrichtung leichter reparierbar.

Nach einer Ausgestaltung der Erfindung ist die Kurvenbahn der Kontur der Oberflächen von unterhalb der Mitnehmervorrichtung befindlichen Bauteilen des Maispflückers in geringem Abstand folgend ausgebildet. Durch die Anpassung der Kurvenbahn an die Kontur der Oberflächen können die Arbeitsorgane der Mitnehmervorrichtung dicht an den Oberflächen entlang geführt werden, woraus sich eine gute Abräumwirkung von sich auf den Oberflächen ansammelndem Erntegut ergibt. Je geringer der Abstand der Mitnehmervorrichtung zu den Oberflächen ist, umso besser ist das Abräumergebnis.

Nach einer Ausgestaltung der Erfindung ist zum Ausheben der Mitnehmervorrichtung ein zweiter von der Längsverstellvorrichtung unabhängig betätigbarer motorischer Antrieb vorhanden. In einzelnen Fällen kann es wünschenswert sein, die Mitnehmervorrichtung nach oben hin von der eingestellten Bewegungsbahn weg zu verschwenken, beispielsweise, um bei der Maschinenwartung und -reinigung besser an die Pflückspalte gelangen zu können, die Mitnehmervorrichtung außer Betrieb zu setzen oder die Bewegungsbahn insgesamt nach oben hin zu verlagern. Da die Längsverstellvorrichtung dem Zweck dient, die Mitnehmervorrichtung an der vorgegebenen Bewegungsbahn entlang zu bewegen, ist es vorteilhaft, für eine Höhenverstellung der Mitnehmervorrichtung einen zweiten motorischen Antrieb vorzuhalten, der von der Längsverstellvorrichtung unabhängig ist. Dadurch wird die Bedienung erleichtert.

Nach einer Ausgestaltung der Erfindung ist der zweite motorische Antrieb ein über eine Drehachse mit dem Stützelement verbundener Hydraulikzylinder und das Stützelement und/oder der Hydraulikzylinder sind mit einer Koppelstange mit dem Haltearm verbunden. Bei dieser Lösung wird die Mitnehmervorrichtung über den Schwenkarm, an den das Stützelement angreift, verschwenkt. Über die Hebelwirkung des Schwenkarms können mit kurzen Stellwegen des Hydraulikzylinders größere Verschwenkbewegungen der Mitnehmervorrichtung bewirkt werden. Durch die Koppelstange, die am Haltearm verbunden ist, kann die Gelenkverbindung zwischen dem Stützelement und dem Hydraulikzylinder stabilisiert werden, so dass diese nicht unter Last einknickt.

Nach einer Ausgestaltung der Erfindung weisen zumindest zwei Haltearme jeweils eine ortsfest angeordnete Kulisse mit Innenverzahnung auf, die jeweils mit einem Zahnrad kämmt, das drehfest auf einer ortsfest, aber drehbar angeordneten Torsionswelle angeordnet sind, und die Torsionswelle überträgt über die Zahnräder und die Kulissen eine Verschwenkbewegung eines Haltearms auf den anderen Haltearm. Über die Torsionswelle kann ein Gleichlauf der Verschwenkbewegung der Haltearme sichergestellt werden.

Nach einer Ausgestaltung der Erfindung ist der Abstand zwischen der Drehachse, um die der Schwenkarm mit dem Haltearm verbunden ist, und der Drehachse, über die der Schwenkarm mit einem ersten Ende der Längsverstellvorrichtung verbunden ist, kürzer als der Abstand zwischen der Drehachse, um die der Schwenkarm mit dem Haltearm verbunden ist, und der Drehachse, über die der Schwenkarm mit einem ersten Ende eines Stützelements verbunden ist. Aus den unterschiedlichen Abständen ergibt sich ein Übersetzungsverhältnis, mit dem die Verschwenkbewegung der Längsverstellvorrichtung in einen von der Mitnehmervorrichtung zurückgelegten längeren Verstellweg übersetzt wird. Durch die Übersetzung kann der Hydraulikzylinder kürzer ausfallen als die Gesamtlänge der Bewegungsbahn.

Nach einer Ausgestaltung der Erfindung weist die Mitnehmervorrichtung eine Anzahl von Mitnehmerelementen auf, die drehfest mit der Rotationsachse der Mitnehmervorrichtung verbunden sind, wobei jedes Mitnehmerelement über einen oder mehrere aus einem nichtmetallischen Werkstoff hergestellte Finger verfügt. Mit den schmalen Fingern ist es möglich, zwischen die Teilerspitzen und die Abdeckhauben der Förderhilfen bis dicht an die Schneidvorrichtung und den Pflückerspalt hinabzutauchen und dort sich ansammelndes Erntegut abzufördern. Durch die Verwendung eines nichtmetallischen Werkstoffes für die Finger weisen diese eine erhöhte Flexibilität und Elastizität auf. Bei Kraftspitzen können die Finger aufgrund ihrer Flexibilität ausweichen, dabei bauen sie Rückstellkräfte auf, durch die sie nach dem Wegfall der Kraftspitze wieder ihre ursprüngliche Form annehmen. Bei der Verwendung von Kunststoffen als Material bleibt klebriges Erntegut auch weniger leicht an den Oberflächen haften, so dass die Finger sauberer bleiben.

Nach einer Ausgestaltung der Erfindung weisen der oder die Finger eine der Rotationsrichtung der Mitnehmervorrichtung nacheilende Krümmung auf. Durch die nacheilende Krümmung spießen die Finger das Erntegut nicht auf, sondern schieben es sanft über die gesamte Länge der Finger mit einer Kraft von schräg oben in die Förderrichtung. Dadurch wird das Risiko verringert, dass sich Erntegut an der Mitnehmervorrichtung aufwickeln könnte.

Nach einer Ausgestaltung der Erfindung sind die Mitnehmerelemente in Querrichtung verschiebbar mit der Rotationsachse der Mitnehmervorrichtung verbunden. Durch die seitliche Verstellbarkeit der Mitnehmerelemente können diese besser an konkrete Ernteverhältnisse angepasst werden, insbesondere, wenn auch die Lage der Pflückspalte am Maispflücker in Querrichtung verschiebbar ausgeführt ist.

Nach einer Ausgestaltung der Erfindung ist die Längsverstellvorrichtung mit einem oder mehreren Servomotoren angetrieben. Elektrische Servomotoren können anstelle der Hydraulikzylinder für die Längsverstellung der Mitnehmervorrichtung verwendet werden. Da bei Servomotoren eine Drehwinkelsteuerung und eine Lageregelung über Sensoren leicht realisierbar ist, kann beim Einsatz von Servomotoren je nach Ausgestaltung auch auf die Ausbildung eines Vielgelenks verzichtet werden, wobei dies keine Ausgestaltung der Erfindung darstellt. Beim Einsatz mehrerer Servomotoren können diese über eine gemeinsame Steuerung in ihrer Bewegung so koordiniert werden, dass sich aus der koordinierten Bewegung der Servomotoren eine von der Steuerung vorgegebene Bewegungsbahn einstellt, an der sich die Mitnehmervorrichtung entlang bewegt.

Es wird ausdrücklich darauf hingewiesen, dass sich die vorstehend beschriebenen Ausgestaltungen der Erfindung jeweils für sich, aber auch untereinander beliebig miteinander kombinieren lassen, soweit dem nicht technische Zwänge entgegen stehen.

Weitere Abwandlungen und Ausführungsdetails der Erfindung lassen sich der nachfolgenden gegenständlichen Beschreibung und den Zeichnungen entnehmen.

Die vorstehende Erfindung soll nun anhand eines Ausführungsbeispiels näher beschrieben werden. Es zeigen:
- Fig. 1:: einen Maispflücker in einer Querschnittsansicht,
- Fig. 2 - 5:: die Ansicht aus Fig. 1 mit verschiedenen Stellpositionen der Mitnehmervorrichtung,
- Fig. 6:: eine Ansicht von schräg oben auf einen Maispflücker, und
- Fig. 7:: eine Seitenansicht auf einen Maispflücker.

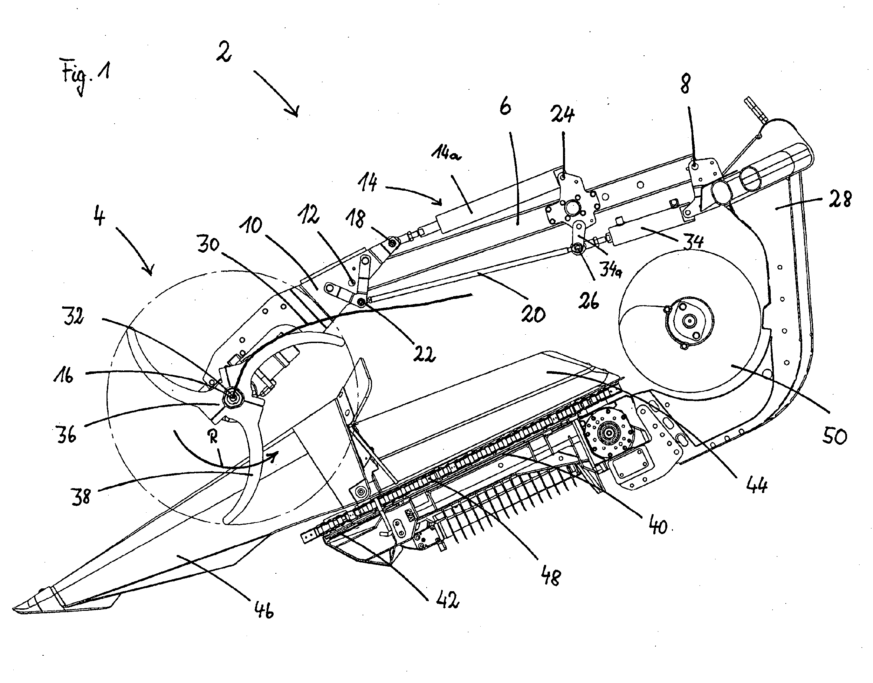

In Fig. 1 ist eine Querschnittsansicht durch einen Maispflücker 2 gezeigt. Im vorderen Bereich des Maispflückers 2 befindet sich die Mitnehmervorrichtung 4, die von einem Haltearm 6 gehalten ist. Der Haltearm 6 ist um eine Drehachse 8 verschwenkbar.

Am Haltearm 6 befindet sich ein Schwenkarm 10, der über eine Drehachse 12 am Haltearm 6 drehbeweglich befestigt ist. Mit dem Schwenkarm 10 ist eine Längsverstellvorrichtung 14 verbunden, über die die Mitnehmervorrichtung 4 in Längsrichtung verstellbar ist. Die Mitnehmervorrichtung 4 ist in einem Befestigungspunkt 16 am Schwenkarm 10 befestigt, während die Längsverstellvorrichtung - im Ausführungsbeispiel bestehend aus dem Hydraulikzylinder 14a - über die Drehachse 18 mit dem Schwenkarm 10 verbunden ist.

Der Schwenkarm 10 wird im Ausführungsbeispiel abgestützt vom Stützelement 20, das mit dem Schwenkarm 10 über die Drehachse 22 verbunden ist. Im Ausführungsbeispiel befindet sich die Drehachse 22 an einer Befestigungslasche, die fest mit dem Schwenkarm 10 verbunden ist.

Die Längsverstellvorrichtung 14 ist über eine Drehachse 24, die in einer fest mit dem Haltearm 6 verbundenen Konsole angeordnet ist, mit dem Haltearm 6 verbunden und fest abgestützt. Das Stützelement 20 ist über eine Drehachse 26 rahmenseitig am Rahmen 28 abgestützt.

Bei einer Betätigung der Längsverstellvorrichtung 14 - im Ausführungsbeispiel also einem Ein- oder Ausfahren des Hydraulikzylinders 14a - ergibt sich für die Rotationsachse 32 der Mitnehmervorrichtung 4 eine Bewegung entlang der Kurvenbahn 30. Die Kurvenbahn 30 ergibt sich als resultierende Bewegung aus der Kombination der Maße des Haltearms 6, des Schwenkarms 10, des Stützelements 20 und dem Bewegungsimpuls der Längsverstellvorrichtung 14 sowie der diese Maschinenelemente verbindenden Drehachsen, die gemeinsam ein Vielgelenk bilden. Bei einer Stellbewegung der Längsverstellvorrichtung 14 ergibt sich aus dem Vielgelenk als Zwangsführung immer eine Position der Rotationsachse 32, die einer der Ausfahrstellung des Hydraulikzylinders 14a entsprechenden Stellung auf der Kurvenbahn 30 entspricht.

Durch eine Verstellbewegung entlang der Kurvenbahn 30 ist es möglich, die Mitnehmervorrichtung 4 je nach ihrer Position in eine Richtung nach vorne oder hinten zu bewegen. Da die Mitnehmervorrichtung 4 rotierend angetrieben ist, kann sie dabei sich auf dem Maispflücker 2 ansammelndes Erntegut abfördern.

Durch einen zweiten Hydraulikzylinder 34 ist es im Ausführungsbeispiel möglich, den Haltearm 6 sowie die daran befestigte Mitnehmervorrichtung 4 aus der in Fig. 1 gezeigten Arbeitsstellung nach oben auszuheben. Der Hydraulikzylinder 34 ist an seinem ersten Ende über eine Drehachse am Rahmen 28 des Maispflückers 2 abgestützt, an seinem anderen Ende ist er über die Drehachse 26 mit dem Stützelement 20 verbunden. Bei einer Ausfahrbewegung drückt der Hydraulikzylinder 34 über das Stützelement 20 den Schwenkarm 10 und den damit über die Drehachse 12 verbundenen Haltearm 6 hoch.

Um bei einer Stellbewegung des Hydraulikzylinders 34 ein Abknicken des Stützelements 20 um die Drehachse 26 zu vermeiden, ist die Drehachse 26 über eine Koppelstange 34a mit dem Haltearm 6 verbunden. Das Stützelement 20 wird also über die Koppelstange 34a in einem definierten Abstand zum Haltearm 6 gehalten.

Die Mitnehmervorrichtung 4 verfügt über eine Anzahl von Mitnehmerelementen 36, die im Ausführungsbeispiel als eine Art rotierender Stern ausgebildet sind. Im Ausführungsbeispiel verfügt das Mitnehmerelement 36 über drei Finger 38, die jeweils eine der Rotationsrichtung R der Mitnehmervorrichtung 4 nacheilende Krümmung aufweisen. Durch die Krümmung schieben die Finger 38 bei einer Rotationsbewegung um die Rotationsachse 32 auf den Oberflächen des Maispflückers 2 liegendes Erntegut sanft in die Abförderrichtung an. Durch die nacheilende Krümmung wird ein Aufsammeln mit und Anhaften von Erntegut an den Finger 38 vermieden.

In Vorfahrtrichtung vor der Schneidzone 42 befinden sich Teilerspitzen 46, die sich von ihrer vorderen Spitze ausgehend zur Seite und nach oben hin verbreitern, um die zu erntenden Maisstängel auf die Pflückspalte zu zu drücken. Bei der Ernte wird ein Maisstängel dann zunächst von der sich im vorderen und unteren Bereich des Maispflückers 2 befindlichen Schneidzone 42 abgeschnitten. Daran schließt sich ein Pflückspalt 40 an, durch den der Stängel einer Maispflanze von der darunter befindlichen Reißwalze nach unten gerissen wird, wobei die Maiskolben von seitlichen Platten, die den Pflückspalt 40 begrenzen, zurückgehalten und vom Stängel abgerissen werden. Die von den Maisstängeln abgerissenen Kolben und Blätter, die sich über dem Pflückspalt und den Abdeckhauben 44 ansammeln, werden im Normalfall von Mitnehmern, die sich auf den Mitnehmerketten 48 befinden, mitgenommen und in die Richtung der Förderschnecke 50 abgefördert. Anhand der Fig. 1 ist allerdings gut nachvollziehbar, dass sich in sehr hohem Mais und bei Lagermais auf den Abdeckhauben 44 Pflanzenbestandteile ansammeln können, die von den Mitnehmerketten 48 und den darauf befestigten Mitnehmern nicht mehr erfasst werden. Wenn sich auf den Oberflächen der Abdeckhauben 44 zunehmend Erntegut ansammelt, kann der Fahrer nicht mehr genau sehen, ob der Maispflücker 2 die Pflückarbeit in den Pflückspalten 40 ordentlich erledigt.

Um in solchen Ernteverhältnissen die Oberflächen des Maispflückers 2 von sich ansammelnden Erntegut zu befreien, hat der Fahrer des Mähdreschers nun erfindungsgemäß die Möglichkeit, die Mitnehmervorrichtung 4 entlang der Pflückspalte 40 über die Länge des Maispflückers 2 zu bewegen. Aus der in Fig. 1 eingezeichneten Kurvenbahn 30 ist erkennbar, dass die Rotationsachse 32 der Mitnehmervorrichtung 4 bei einer Verstellbewegung vom vorderen Startpunkt ausgehend zunächst vor allem nach oben hin verlagert wird, um eine Kollision der Finger 38 mit den Mitnehmern der Mitnehmerkette 48 und den Messern in der Schneidzone 42 und der diese Bauteile abdeckenden Abdeckhaube 44 zu vermeiden. Dabei ist die Mitnehmervorrichtung 4 aber so der Bewegungsbahn 30 entlang zwangsgeführt, dass sich die Finger 38 der Mitnehmerelemente 36 immer dicht an den Oberflächen der Bauteile des Maispflückers kollisionsfrei entlang bewegen. Dadurch ergibt sich eine sehr gute Abförderwirkung für die auf den Oberflächen des Maispflückers 2 angesammelten Erntegutreste. Diese können bei einer Verlagerung der rotierenden Mitnehmervorrichtung 4 auf die Förderschnecke 50 zu komplett in diese abgefördert werden.

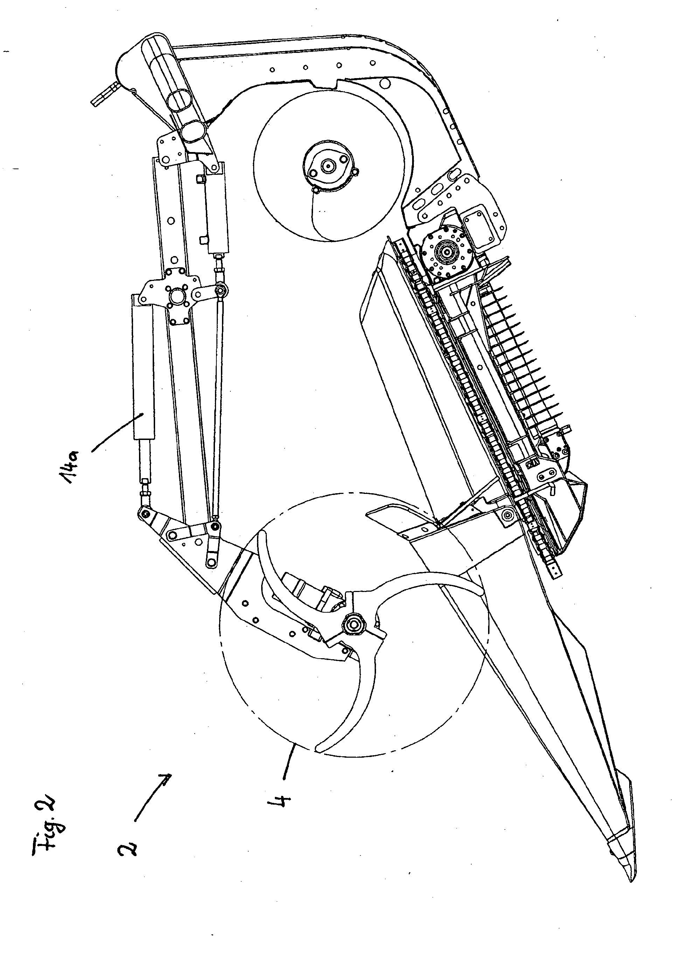

In Fig. 2 ist eine Stellposition gezeigt, in der die Kolbenstange des Hydraulikzylinders 14a um ein kurzes Stück aus der eingefahrenen Endstellung, wie sie in Fig. 1 gezeigt ist, herausgefahren worden ist. Aus der Stellbewegung des Hydraulikzylinders 14a hat sich für die Mitnehmervorrichtung 4 eine gegenüber der Fig. 1 erhöhte und leicht in Vorfahrtrichtung gesehen nach hinten verlagerte räumliche Lage ergeben. Über die Drehachsen 8, 12, 18, 22, 24 und 26 konnten sich die Bauteile, die das Vielgelenk bilden - die Längsverstellvorrichtung 14 mit dem Haltearm 6, dem Schwenkarm 10 und dem Stützelement 20 - spannungsfrei an die neuen geometrischen Verhältnisse anpassen und sich in ihre neue räumliche Lage bewegen.

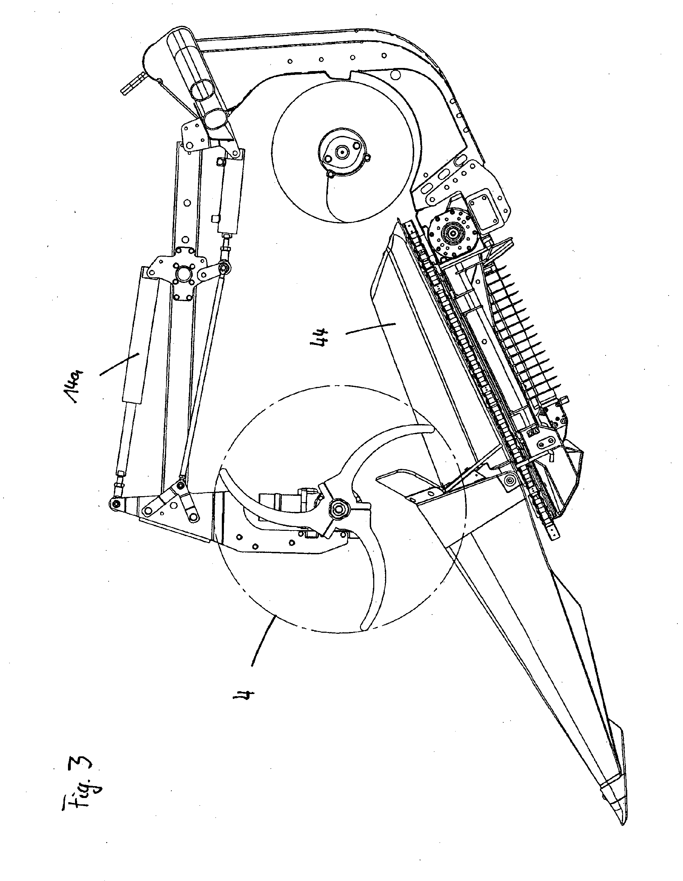

In Fig. 3 ist die Kolbenstange des Hydraulikzylinders 14a gegenüber der Fig. 2 in einer weiter ausgefahrenen Stellung gezeigt. Die Mitnehmervorrichtung 4 hat sich gegenüber der Position in Fig. 2 nach hinten auf die Förderschnecke 50 zu verlagert. Mit ihrem Hüllkreis hat die Mitnehmervorrichtung 4 nun etwa die Mitte der Abdeckhaube 44 erreicht.

Durch die zu den Pflückspalten seitlich abfallende Form der Abdeckhauben 44 kollidieren die rotierenden Mitnehmerelemente 36 nicht mit den Abdeckhauben 44, sondern tauchen in den von zwei benachbarten Abdeckhauben 44 seitlich begrenzten Zwischenraum oberhalb der Pflückspalte 40 ein.

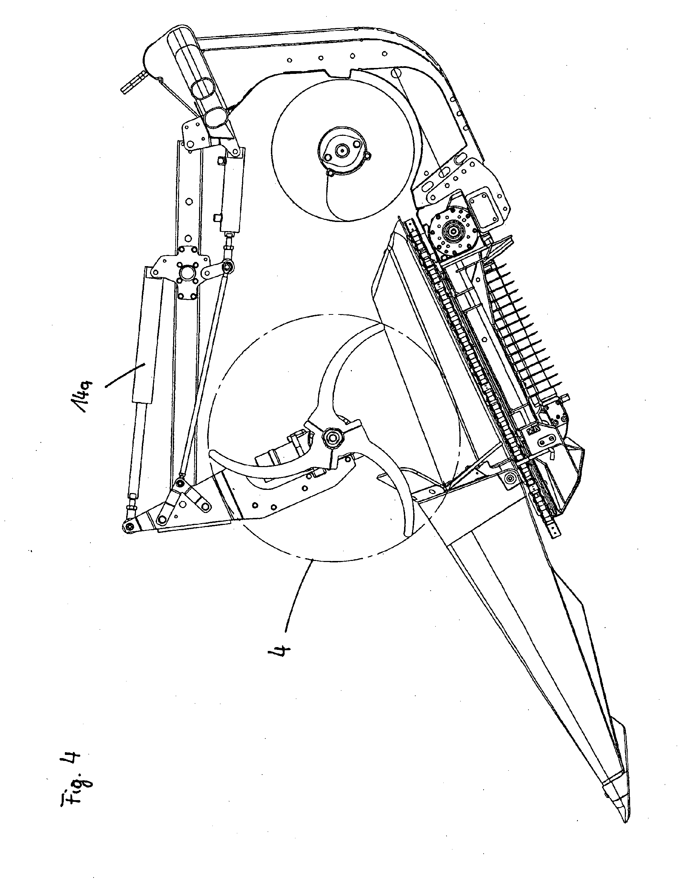

In Fig. 4 ist der Hydraulikzylinder 14a noch weiter ausgefahren, dadurch ist die Mitnehmervorrichtung 4 noch weiter nach hinten auf die Förderschnecke 50 zu bewegt worden. In dieser Position überstreicht das Mitnehmerelement 36 mit seinem Hüllkreis nahezu die gesamte Länge einer Abdeckhaube 44.

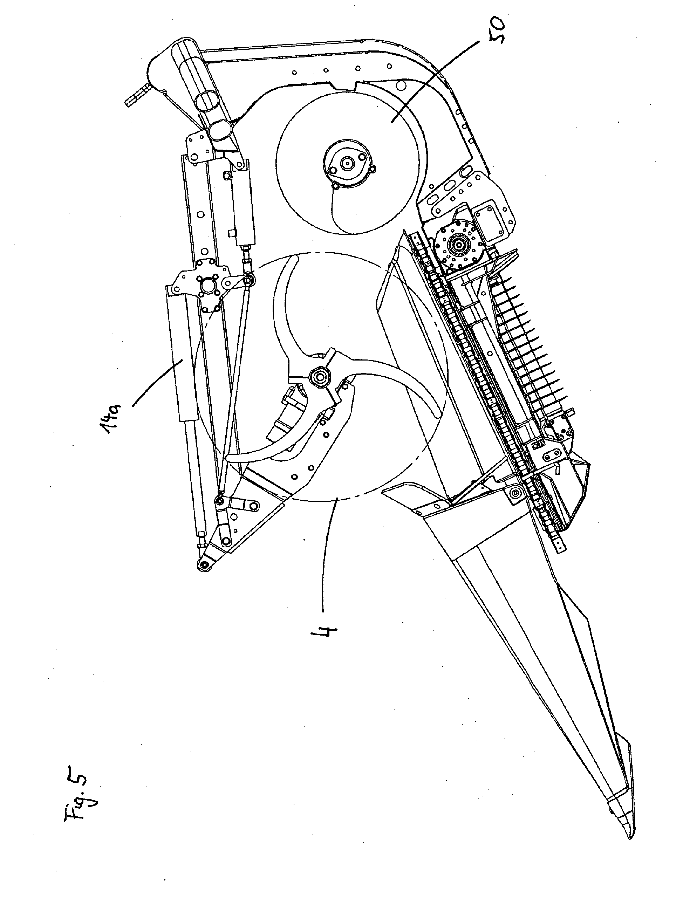

In Fig. 5 ist der Hydraulikzylinder 14a nun in seiner voll ausgefahrenen Stellung gezeigt. In dieser Stellung hat die Mitnehmervorrichtung 4 ihre Endstellung erreicht. Es ist gut erkennbar, dass die Mitnehmervorrichtung 4 mit den Fingern 38 bei einer Rotationsbewegung des Mitnehmerelementes 36 Erntegut, das sich oberhalb der Mitnehmerkette 48 befindet, in den Wirkbereich der Förderschnecke 50 abwirft. Dadurch ist eine vollständige und sichere Abförderung des sich auf dem Maispflücker 2 ansammelnden Erntegutes gewährleistet.

Die sich aus dem Vielgelenk im Ausführungsbeispiel ergebende Kurvenbahn 30 ist nur als Ausführungsbeispiel zu sehen. Durch unterschiedliche Maße der Bestandteile des Vielgelenks sowie durch eine unterschiedliche räumliche Lage der Drehachsen kann eine vom Ausführungsbeispiel abweichende Kurvenbahn 30 realisiert werden. An Stelle eines Hydraulikzylinders 14a kann auch ein anderer Stellantrieb verwendet werden. So ist es insbesondere auch möglich, an Stelle eines hydraulischen Antriebes einen oder mehrere elektrische Servomotoren zu verwenden.

Im Ausführungsbeispiel erstreckt sich die Kurvenbahn 30 über nahezu die gesamte Länge des Pflückspaltes 40. Die Bewegungsbahn kann kürzer gewählt werden. Im Ausführungsbeispiel beginnt die Kurvenbahn im vorderen Bereich vor dem Pflückspalt 40, sie kann auch erst oberhalb des Pflückspaltes 40 beginnen. Außerdem reicht die Kurvenbahn 30 im vorderen Bereich des Maispflückers 2 so weit nach unten herab, dass der unterste Punkt des Hüllkreises der Finger 38 etwa in Höhe der Schneidzone 42 liegt. Die Kurvenbahn 30 kann auch so gestaltet sein, dass der unterste Punkt des Hüllkreises noch unterhalb der Schneidzone 42 oder auch oberhalb liegt.

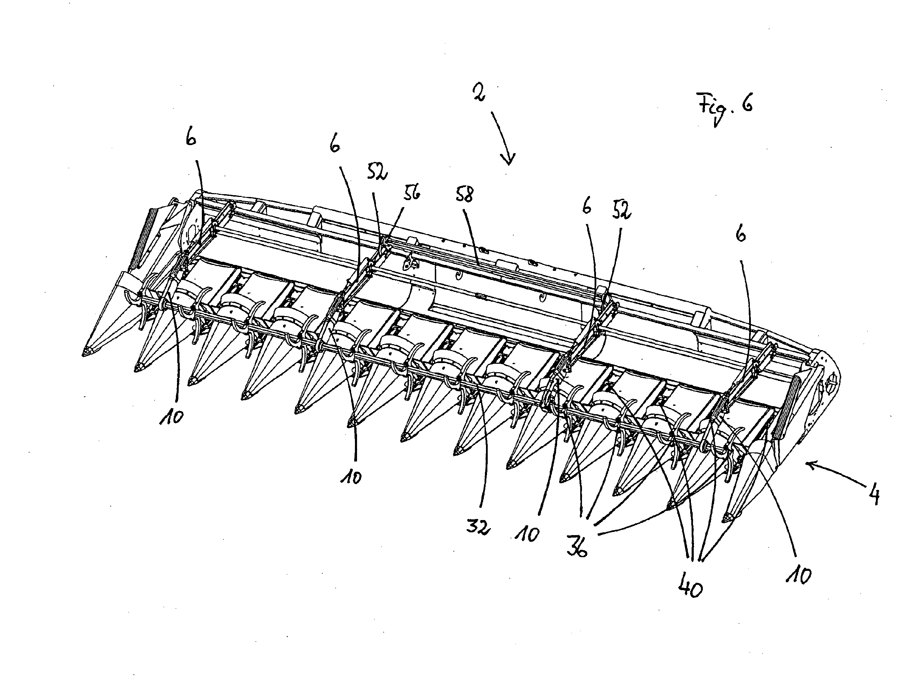

In Fig. 6 ist eine Ansicht von schräg oben auf einen beispielhaften Maispflücker 2 gezeigt. Der in Fig. 6 gezeigte Maispflücker 2 verfügt über insgesamt zwölf Pflückspalte, denen jeweils ein Mitnehmerelement 36 vorgeordnet ist. Die Mitnehmerelemente 36 sind auf der Rotationsachse 32 der Mitnehmervorrichtung 4 angeordnet. Im Ausführungsbeispiel ist die Mitnehmervorrichtung 4 von insgesamt vier Haltearmen 6 gehalten, an denen jeweils ein Schwenkarm 10 befestigt ist.
Da die Mitnehmervorrichtung 4 in der in Fig. 6 gezeigten Stellung den Schnitt und die Gutannahme von gerade stehenden Maisstängeln behindern könnte, ist es möglich, die Mitnehmervorrichtung 4 entweder entlang der Kurvenbahn 30 in eine hintere Stellung zu verlagern und/oder die Mitnehmervorrichtung 4 nach oben hin auszuheben, um dadurch den Einlaufbereich der Maispflanzen in den Wirkbereich der Messer in der Schneidzone 42 frei zu machen.

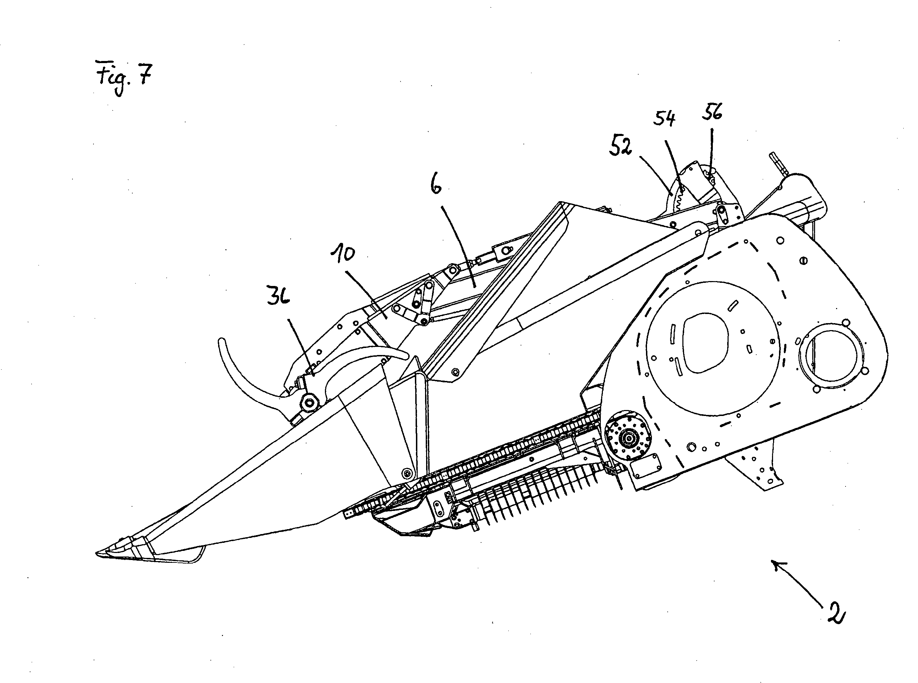

Um einen Gleichlauf der vier Haltearme 6 bei einer Verschwenkbewegung sicher zu stellen, sind die beiden mittleren Haltearme 6 über eine die Verschwenkbewegung koordinierende Gleichlaufvorrichtung miteinander verbunden. Die Gleichlaufvorrichtung besteht aus mit den Haltearmen 6 starr verbundenen Kulissen 52, die über eine Innenverzahnung 54 mit jeweils einem Zahnrad 56 kämmen, das drehfest auf einer Torsionswelle 58 angeordnet ist. Die Kulisse 52, die Innenverzahnung 54 und das Zahnrad 56 sind noch einmal in der Seitenansicht auf den Maispflücker 2 in Fig. 7 erkennbar. Werden die Haltearme 6 nach oben verschwenkt, wird die Kulisse 52 mit der Innenverzahnung 54 an dem Zahnrad 56 entlang geführt, das dadurch in eine Drehbewegung versetzt wird. Diese Drehbewegung wird auf die Torsionswelle 58 übertragen. Treten bei einer Verschwenkbewegung der mit der Torsionswelle 58 verbundenen mittleren Haltearme 6 Geschwindigkeitsunterschiede auf, so wird über die Torsionswelle 58 und die auf die Innenverzahnung 54 wirkenden Zahnräder 56 der sich im Vergleich zu schnell bewegende Haltearm 6 abgebremst und der sich zu langsam bewegende Haltearm 6 beschleunigt, so dass sich zwangsweise ein Gleichlauf der beiden Haltearme 6 einstellt. Hierdurch ist es möglich, auch über eine größere Arbeitsbreite eines Maispflückers 2 eine identische Verschwenkbewegung aller Haltearme 6 sicher zu stellen.

Die Erfindung ist nicht auf das vorstehend beschriebene Ausführungsbeispiel beschränkt. Dem Fachmann bereitet es keine Schwierigkeiten, das Ausführungsbeispiel auf eine ihm als geeignet erscheinende Weise durch Veränderung von Bauteilen an einen konkreten Anwendungsfall anzupassen.

## Patentansprüche

1. Maispflücker (2) mit einer sich quer über die Arbeitsbreite des Maispflückers (2) erstreckenden und an zumindest zwei um eine Drehachse (8) schwenkbaren Haltearmen (6) befestigten rotierend antreibbaren Mitnehmervorrichtung (4), deren relative Lage zum Maispflücker (2) mittels einer Längsverstellvorrichtung (14) parallel zur Vorfahrtrichtung und mittels einer Verschwenkvorrichtung um eine Drehachse (8) höhenmäßig verstellbar ist, die Mitnehmervorrichtung (4) mittels der Längsverstellvorrichtung (14), die motorisch betätigbar ausgestaltet ist, in einer ersten Richtung aus einer ersten Position, in der die Drehachse (32) der Mitnehmervorrichtung (4) in Vorfahrtrichtung gesehen vor oder über einem vorderen Bereich eines Pflückspaltes (40) liegt, über eine Kurvenbahn (30) in eine zweite Position beweglich ist, die über einem hinteren Bereich des Pflückspaltes (40) liegt, und in einer zweiten Richtung in entgegengesetzter Richtung, wobei die Mitnehmervorrichtung (4) während der Verstellbewegung nicht mit anderen Bauteilen (42, 44, 48) des Maispflückers (2) kollidiert, wobei zumindest zwei Haltearme (6) jeweils über eine Drehachse (12) schwenkbar mit einem jeweils zugehörigen Schwenkarm (10) verbunden sind und wobei der Schwenkarm (10) an seinem ersten freien Ende an einem Befestigungspunkt (16) mit der Mitnehmervorrichtung (4) und an seinem zweiten freien Ende über eine Drehachse (18) mit einem ersten Ende der Längsverstellvorrichtung (14) verbunden ist, und wobei die Drehachse (12), um die der Schwenkarm (10) mit dem Haltearm (6) verbunden ist, zwischen dem Befestigungspunkt (16) der Mitnehmervorrichtung (4) am Schwenkarm (10) und der Drehachse (18), über die der Schwenkarm (10) mit der Längsverstellvorrichtung (14) verbunden ist, angeordnet ist, ein zweites Ende der Längsverstellvorrichtung (14) über eine Drehachse (24) in einem Abstand zum Schwenkarm (10) am Haltearm (6) abgestützt ist und die Längsverstellvorrichtung (14) durch nur einen Hydraulikzylinder (14a) an einem Haltearm (6) motorisch betätigbar ausgestaltet ist, **dadurch gekennzeichnet dass** die Verstellbewegung entlang der Kurvenbahn (30) durch eine Zwangsführung gesteuert ist, wobei
- der Schwenkarm (10) über eine Drehachse (22) mit einem ersten Ende eines Stützelements (20) verbunden ist, und
- ein zweites Ende des Stützelements (20) über eine Drehachse (26) in einem Abstand zum Schwenkarm (10) am Rahmen (28) des Maispflückers (2) abgestützt ist,
und die mit den Schwenkarmen (10) verbundenen Haltearme (6) auf diese Weise die Zwangsführung entlang der Kurvenbahn (30) ausbilden.

2. Maispflücker (2) nach Anspruch 1, **dadurch gekennzeichnet, dass** die Kurvenbahn (30) der Kontur der Oberflächen von unterhalb der Mitnehmervorrichtung (4) befindlichen Bauteilen (42, 44, 48) des Maispflückers (2) in geringem Abstand folgend ausgebildet ist.

3. Maispflücker (2) nach Anspruch 1 oder 2, **dadurch gekennzeichnet, dass** zum Ausheben der Mitnehmervorrichtung (4) ein zweiter von der Längsverstellvorrichtung (14) unabhängig betätigbarer motorischer Antrieb vorhanden ist.

4. Maispflücker (2) nach Anspruch 3, **dadurch gekennzeichnet, dass** der zweite motorische Antrieb ein über die Drehachse (26) mit dem Stützelement (20) verbundener Hydraulikzylinder (34) ist und das Stützelement (20) und/oder der Hydraulikzylinder (34) mit einer Koppelstange (34a) mit dem Haltearm (6) verbunden sind.

5. Maispflücker (2) nach einem der vorhergehenden Ansprüche, **dadurch gekennzeichnet, dass** zumindest zwei Haltearme (6) jeweils eine ortsfest angeordnete Kulisse (52) mit Innenverzahnung (54) aufweisen, die jeweils mit einem Zahnrad (56) kämmt, das drehfest auf einer ortsfest, aber drehbar angeordneten Torsionswelle (58) angeordnet sind, und die Torsionswelle (58) über die Zahnräder (56) und die Kulissen (52) eine Verschwenkbewegung eines Haltearms (6) auf den anderen Haltearm (6) überträgt.

6. Maispflücker (2) nach einem der vorhergehenden Ansprüche, **dadurch gekennzeichnet, dass** der Abstand zwischen der Drehachse (12), um die der Schwenkarm (10) mit dem Haltearm (6) verbunden ist, und der Drehachse (18), über die der Schwenkarm (10) mit einem ersten Ende der Längsverstellvorrichtung (14) verbunden ist, kürzer ist als der Abstand zwischen der Drehachse (12), um die der Schwenkarm (10) mit dem Haltearm (6) verbunden ist, und der Drehachse (22), über die der Schwenkarm (10) mit einem ersten Ende eines Stützelements (20) verbunden ist.

7. Maispflücker (2) nach einem der vorhergehenden Ansprüche, **dadurch gekennzeichnet, dass** die Mitnehmervorrichtung (4) eine Anzahl von Mitnehmerelementen (36) aufweist, die drehfest mit der Rotationsachse (32) der Mitnehmervorrichtung (4) verbunden sind, wobei jedes Mitnehmerelement (36) über einen oder mehrere aus einem nichtmetallischen Werkstoff hergestellte Finger (38) verfügt.

8. Maispflücker (2) nach Anspruch 7, **dadurch gekennzeichnet, dass** der oder die Finger (38) eine der Rotationsrichtung (R) der Mitnehmervorrichtung (4) nacheilende Krümmung aufweisen.

9. Maispflücker (2) nach Anspruch 7 oder 8, **dadurch gekennzeichnet, dass** die Mitnehmerelemente (36) in Querrichtung verschiebbar mit der Rotationsachse (32) der Mitnehmervorrichtung (4) verbunden sind.

10. Maispflücker (2) nach einem der vorhergehenden Ansprüche, **dadurch gekennzeichnet, dass** die Längsverstellvorrichtung (14) mit einem oder mehreren Servomotoren angetrieben ist.

## Claims

1. Corn picker (2) comprising a rotatably drivable sweeper device (4) which extends transverselyacross the working width of the corn picker (2) and is attached to at least two holding arms (6), which are pivotable about a hinge pin (8), the relative position of which sweeper device with respect to the corn picker (2) can be adjusted parallel to the forward driving direction by means of a longitudinal adjustment device (14) and in terms of height by means of a pivoting device about a hinge pin (8), the sweeper device (4) can be moved, by means of the motor-actuatable longitudinal adjustment device (14), in a first direction out of a first position, in which the hinge pin (32) of the sweeper device (4) is located in front of or above a front region of a picking gap (40) when viewed in the forward driving direction, into a second positionabove a rear region of the picking gap (40),over a curved path (30), and in a second, opposite direction, the sweeper device (4) not colliding with other components (42, 44, 48) of the corn picker (2) during the adjustment movement, at least two holding arms (6) each being pivotally connected to a respective associated pivot arm (10) via a hinge pin (12) and the pivot arm (10) being connected, at its first free end, to the sweeper device (4) at an attachment point (16) and, at its second free end, to a first end of the longitudinal adjustment device (14) via a hinge pin (18), and the hinge pin (12), about which the pivot arm (10) is connected to the holding arm (6), being arranged between the attachment point (16) of the sweeper device (4) to the pivot arm (10) and the hinge pin (18), by means of which the pivot arm (10) is connected to the longitudinal adjustment device (14), a second end of the longitudinal adjustment device (14) being supported on the holding arm (6) at a spacing from the pivot arm (10) by means of a hinge pin (24) and the longitudinal adjustment device (14) being motor-actuatable on one holding arm (6) by just one hydraulic cylinder (14a), **characterised in that** the adjustment movement along the curved path (30) is controlled by positive guidance, the pivot arm (10) being connected to a first end of a support element (20) by means of a hinge pin (22), and a second end of the support element (20) being supported on the structure (28) of the corn picker (2) at a spacing from the pivot arm (10) via a hinge pin (26), and the holding arms (6), connected to the pivot arms (10), in this way forming the positive guidance along the curved path (30).

2. Corn picker (2) according to claim 1, **characterised in that** the curved path (30) is designed to follow, with little spacing, the contour of the surfaces of components (42, 44, 48) of the corn picker (2) located below the sweeper device (4).

3. Corn picker (2) according to either claim 1 or claim 2, **characterised in that** a second motor drive, which is actuatable independently of the longitudinal adjustment device (14), is provided for raising the sweeper device (4).

4. Corn picker (2) according to claim 3, **characterised in that** the second motor drive is a hydraulic cylinder (34) connected to the support element (20) via the hinge pin (26) and the support element (20) and/or the hydraulic cylinder (34) is/are connected to the holding arm (6) by means of a coupling rod (34a).

5. Corn picker (2) according to any of the preceding claims, **characterised in that** at least two holding arms (6) each comprise a stationary crank (52) having an inner toothing (54) which in each case meshes with a gear (56) arranged non-rotatably on a stationary, but rotatable, torsionbar (58), and the torsion bar (58) transfers a pivot movement of one holding arm (6) to the other holding arm (6) via the gears (56) and the cranks (52).

6. Corn picker (2) according to any of the preceding claims, **characterised in that** the spacing between the hinge pin (12), about which the pivot arm (10) is connected to the holding arm (6), and the hinge pin (18), via which the pivot arm (10) is connected to a first end of the longitudinal adjustment device (14), is smaller than the spacing between the hinge pin (12), about which the pivot arm (10) is connected to the holding arm (6), and the hinge pin (22), via which the pivot arm (10) is connected to a first end of a support element (20).

7. Corn picker (2) according to any of the preceding claims, **characterised in that** the sweeper device (4) comprises a plurality of sweeper elements (36) which are connected for conjoint rotation with the rotary shaft (32) of the sweeper device (4), each sweeper element (36) having one or more fingers (38) made of a non-metallic material.

8. Corn picker (2) according to claim 7, **characterised in that** the finger(s) (38) comprise(s) a bend which trails the direction of rotation (R) of the sweeper device (4).

9. Corn picker (2) according to either claim 7 or claim 8, **characterised in that** the sweeper elements (36) are connected to the rotary shaft (32) of the sweeper device (4) so as to be displaceable in the transverse direction.

10. Corn picker (2) according to any of the preceding claims, **characterised in that** the longitudinal adjustment device (14) is driven by one or more servomotors.

## Revendications

1. Cueilleur à maïs (2) avec un dispositif d'entraînement (4) s'étendant transversalement sur la largeur de travail du cueilleur à maïs (2), pouvant être entraîné en rotation et fixé sur au moins deux bras de retenue (6) pouvant être pivotés autour d'un axe de rotation (8), dont la position relative par rapport au cueilleur à maïs (2) peut être réglée en hauteur à l'aide d'un dispositif de réglage longitudinal (14) parallèlement au sens d'avance et à l'aide d'un dispositif de pivotement autour d'un axe de rotation (8), le dispositif d'entraînement (4) étant mobile à l'aide du dispositif de réglage longitudinal (14) qui est configuré de sorte à pouvoir être actionné par moteur, dans une première direction depuis une première position, dans laquelle l'axe de rotation (32) du dispositif d'entraînement (4) se trouve, vu dans le sens d'avance, devant ou au-dessus d'une zone avant d'une fente de cueillage (40), sur une trajectoire courbe (30) dans une seconde position qui se trouve au-dessus d'une zone arrière de la fente de cueillage (40), et dans une seconde direction dans la direction opposée, le dispositif d'entraînement (4) n'entrant pas en collision pendant le mouvement de réglage avec d'autres composants (42, 44, 48) du cueilleur à maïs (2), au moins deux bras de retenue (6) étant respectivement reliés par un axe de rotation (12) de manière pivotante à un bras de pivotement (10) respectivement afférent et le bras de pivotement (10) étant relié au niveau de sa première extrémité libre sur un point de fixation (16) au dispositif d'entraînement (4) et au niveau de sa seconde extrémité libre par un axe de rotation (18) à une première extrémité du dispositif de réglage longitudinal (14) et l'axe de rotation (12), par lequel le bras de pivotement (10) est relié au bras de retenue (6), étant disposé entre le point de fixation (16) du dispositif d'entraînement (4) sur le bras de pivotement (10) et l'axe de rotation (18), par lequel le bras de pivotement (10) est relié au dispositif de réglage longitudinal (14), une seconde extrémité du dispositif de réglage longitudinal (14) étant en appui par un axe de rotation (24) à une distance du bras de pivotement (10) contre le bras de retenue (6) et le dispositif de réglage longitudinal (14) étant configuré de manière à pouvoir être actionné par moteur par un seul vérin hydraulique (14a) sur un bras de retenue (6), **caractérisé en ce que** le mouvement de réglage le long de la trajectoire courbe (30) est commandé par un guidage forcé, le bras de pivotement (10) étant relié par un axe de rotation (22) à une première extrémité d'un élément d'appui (20), et une seconde extrémité de l'élément d'appui (20) étant en appui par un axe de rotation (26) à une distance du bras de pivotement (10) contre le cadre (28) du cueilleur à maïs (2),
et les bras de retenue (6) reliés aux bras de pivotement (10) réalisant de cette manière le guidage forcé le long de la trajectoire courbe (30).

2. Cueilleur à maïs (2) selon la revendication 1, **caractérisé en ce que** la trajectoire courbe (30) est réalisée de manière à suivre à faible distance le contour des surfaces des composants (42, 44, 48) se trouvant sous le dispositif d'entraînement (4) du cueilleur à maïs (2).

3. Cueilleur à maïs (2) selon la revendication 1 ou 2, **caractérisé en ce qu'**un second entraînement motorisé actionnable indépendamment du dispositif de réglage longitudinal (14) est présent pour le relevage du dispositif d'entraînement (4).

4. Cueilleur à maïs (2) selon la revendication 3, **caractérisé en ce que** le second entraînement motorisé est un vérin hydraulique (34) relié par l'axe de rotation (26) à l'élément d'appui (20) et l'élément d'appui (20) et/ou le vérin hydraulique (34) est relié par une tige de couplage (34a) au bras de retenue (6).

5. Cueilleur à maïs (2) selon l'une quelconque des revendications précédentes, **caractérisé en ce qu'**au moins deux bras de retenue (6) présentent respectivement une coulisse (52) disposée fixement avec une denture intérieure (54) qui s'engrène respectivement avec une roue dentée (56), qui sont disposées sans pouvoir tourner sur un arbre de torsion (58) disposé fixement mais de manière rotative, et l'arbre de torsion (58) transmet par les roues dentées (56) et les coulisses (52) un mouvement de pivotement d'un bras de retenue (6) à l'autre bras de retenue (6).

6. Cueilleur à maïs (2) selon l'une quelconque des revendications précédentes, **caractérisé en ce que** la distance entre l'axe de rotation (12), par lequel le bras de pivotement (10) est relié au bras de retenue (6), et l'axe de rotation (18), par lequel le bras de pivotement (10) est relié à une première extrémité du dispositif de réglage longitudinal (14) est plus courte que la distance entre l'axe de rotation (12), par lequel le bras de pivotement (10) est relié au bras de retenue (6) et l'axe de rotation (22), par lequel le bras de pivotement (10) est relié à la première extrémité d'un élément d'appui (20).

7. Cueilleur à maïs (2) selon l'une quelconque des revendications précédentes, **caractérisé en ce que** le dispositif d'entraînement (4) présente un nombre d'éléments d'entraînement (36) qui sont reliés sans pouvoir tourner à l'axe de rotation (32) du dispositif d'entraînement (4), chaque élément d'entraînement (36) disposant d'un ou de plusieurs doigts (38) fabriqués en un matériau non métallique.

8. Cueilleur à maïs (2) selon la revendication 7, **caractérisé en ce que** le ou les doigts (38) présentent une courbure en arrière du sens de rotation (R) du dispositif d'entraînement (4).

9. Cueilleur à maïs (2) selon la revendication 7 ou 8, **caractérisé en ce que** les éléments d'entraînement (36) sont reliés de manière mobile dans le sens transversal à l'axe de rotation (32) du dispositif d'entraînement (4).

10. Cueilleur à maïs (2) selon l'une quelconque des revendications précédentes, **caractérisé en ce que** le dispositif de réglage longitudinal (14) est entraîné avec un ou plusieurs servomoteurs.
